(19) Europäisches Patentamt
European Patent Office
Office européen des brevets

(11) Publication number: **0 396 244 A2**

(12) # EUROPEAN PATENT APPLICATION

(21) Application number: **90303081.5**

(51) Int. Cl.$^5$: **C08L 69/00, C08L 75/06**

(22) Date of filing: **22.03.90**

(30) Priority: **02.05.89 US 346505**

(43) Date of publication of application:
**07.11.90 Bulletin 90/45**

(84) Designated Contracting States:
**BE DE FR GB IT NL SE**

(71) Applicant: **THE DOW CHEMICAL COMPANY**
**2030 Dow Center Abbott Road**
**Midland, MI 48640(US)**

(72) Inventor: **Skochdopole, Richard E.**
**2525 Lambros Drive**
**Midland, Michigan 48640(US)**
Inventor: **Wright, Dane L.**
**103 Adams**
**Midland, Michigan 48640(US)**

(74) Representative: **Burford, Anthony Frederick et al**
**W.H. Beck, Greener & Co. 7 Stone Buildings**
**Lincoln's Inn**
**London WC2A 3SZ(GB)**

(54) **Thermoplastic polyblends of aromatic polycarbonates and thermoplastic polyurethanes.**

(57) Binary thermoplastic polyblends consisting essentially of from 50 to 95 weight percent thermoplastic aromatic polycarbonate and from 5 to 50 weight percent polycaprolactone polyol-based thermoplastic polyurethane (TPU) having a Shore Hardness of from 70A to 70D exhibit improved hydrocarbon solvent resistance over polycarbonate resins.

EP 0 396 244 A2

# THERMOPLASTIC POLYBLENDS OF AROMATIC POLYCARBONATES AND THERMOPLASTIC POLYURETHANES

This invention relates to a thermoplastic polymeric resin which is a polyblend of a thermoplastic aromatic polycarbonate and a thermoplastic polycaprolactone polyol-based polyurethane.

Thermoplastic polycarbonate resins are readily molded at elevated temperatures to make a wide variety of articles. Exemplary of such articles are automotive parts, tool housings, structural components and the like. The use of polycarbonate on its own for molding purposes is limited as the polycarbonate has a number of deficiencies including sensitivity of impact toughness to the ambient temperature and more particularly thickness of the molded article, and susceptibility to degradation by solvents including water and hydrocarbons.

Correction of such deficiency of polycarbonate resins is known by blending the polycarbonates with other polymeric additives, such as disclosed in U.S. Patent No. 3,431,224.

Polycarbonate resins have been modified by blending with other polymers including polyethylene, polypropylene, copolymers of ethylene and an alkyl acrylate, polyamide, polyvinyl acetate, alkyl cellulose ether and polyurethane elastomer.

In U.S. Patent No. 4,034,016 a ternary blend consisting of a polycarbonate, a polybutylene terephthalate and a thermoplastic polyurethane (hereafter referred to as TPU) is disclosed having an improved impact strength at critical thickness. U.S. Patent No. 4,179,479 discloses a ternary blend of a TPU, a thermoplastic polycarbonate and an acrylic polymer; the latter functioning as a processing aid to confer uniformity of melt flow properties. U.S. Patent No. 4,350,799 discloses a ternary blend containing a TPU, a polycarbonate and a polyphosphate, the blend displays reduced flammability. Ternary blends of TPU, polycarbonate and rubbers as impact modifiers are disclosed by EP 125739 and U.S. Patent No. 4,522,979.

The preparation of TPU/polycarbonate, binary blends has been little studied due to the inherent problems of compatibility between polycarbonate and TPU including, for example, large differences in melt viscosities, processing temperatures and thermodynamic solubilities. These differences are especially prominent with polyether-based TPUs.

In the publication, U.S. Patent No. 4,743,650, binary blends consisting essentially of a thermoplastic aromatic polycarbonate and from 5 to 35 parts by weight of a thermoplastic polyether polyol-based polyurethane are disclosed.

Accordingly, it would be desirable to provide a binary polycarbonate/TPU blend wherein the incompatibility difference of the two polymers has been minimized and wherein molded articles prepared therefrom show improved resistance to hydrocarbon solvents and improved impact resistance and toughness compared to polycarbonate alone.

In one aspect, this invention is a thermoplastic polyblend which consists essentially of

(a) from 50 to 95 weight percent based on the combined weights of (a) and (b) of a thermoplastic aromatic polycarbonate polymer; and

(b) from 5 to 50 weight percent based on the combined weights of (a) and (b) of a thermoplastic polycaprolactone polyol-based polyurethane having a Shore Hardness of from 70A to 70D.

Preferably, the resulting thermoplastic polyblend exhibits an environmental crack stress resistance of from 1160 psi ($8 \times 10^3$) kPa and a flexural modulus of from $1.10 \times 10^5$ psi (0.75 GPa).

In a second aspect, this invention is a process for preparing a thermoplastic polyblend which consists essentially of melt blending:

(a) from 50 to 95 weight percent based on the combined weights of (a) and (b) of a thermoplastic aromatic polycarbonate polymer; and

(b) from 5 to 50 weight percent based on the combined weights of (a) and (b) of a thermoplastic polycaprolactone polyol-based polyurethane having a Shore Hardness from 70A to 70D, and characterized in that the melt blending process is substantially free of an acrylic polymer processing aid.

In a third aspect, this invention is an article prepared by melt extrusion or molding of a polyblend characterized in that the polyblend consists essentially of

(a) from 50 to 95 weight percent based on the combined weights of (a) and (b) of a thermoplastic aromatic polycarbonate polymer; and

(b) from 5 to 50 weight percent based on the combined weights of (a) and (b) of a thermoplastic polycaprolactone polyol-based polyurethane having a Shore Hardness of from 70A to 70D, and characterized in that the resulting thermoplastic polyblend exhibits an environmental crack stress resistance of from 1160 psi ($8 \times 10^3$) kPa and a flexural modulus of from $1.10 \times 10^5$ psi 0.75 GPa.

Surprisingly, it has been found that by using a said TPU which has a Shore Hardness of from 70A to

70D in combination with a thermoplastic aromatic polycarbonate a thermoplastic polyblend which has good processing, mechanical, and chemical properties including solvent resistance can be prepared.

The polyblend consists essentially of a thermoplastic aromatic polycarbonate polymer in from at least 50, preferably at least 55 and up to 95, preferably up to 75, and more preferably up to 70 weight percent based on the combined weights of the thermoplastic aromatic polycarbonate and the thermoplastic polyurethane (TPU) present.

The TPU is present in the polyblend in from at least 5, preferably at least 25, and more preferably at least 30, and up to 50, preferably up to 45 weight percent based on the combined weights of the thermoplastic aromatic polycarbonate and the thermoplastic polyurethane (TPU) present.

Mixtures of thermoplastic aromatic polycarbonate polymers and/or mixtures of thermoplastic polycaprolactone polyol-based polyurethanes of the aforementioned hardness may be present in the polyblends.

Suitable thermoplastic aromatic polycarbonate polymers that can be used in the practice of this invention are those aromatic homopolycarbonates and aromatic copolycarbonates which advantageously have a molecular weight of from 10,000 to 200,000, and preferably of from 15,000 to 100,000. In addition, the polycarbonate advantageously has a melt flow rate of at least 8 g/10 minutes, preferably at least 10 g/10 minutes, and more preferably at least 12 g/10 minutes but advantageously less than 30 g/10 minutes, preferably less than 22 g/10 minutes and more preferably less than 18 g/10 minutes at 300 °C with 1.2 kg weight as measured by the ASTM Procedure D-1238. However, use of polycarbonates having melt-flow rates as high as 100 g/10 minutes is possible when it is beneficial to the overall melt processing characteristics of the polyol blend and minimizes the possibility of thermal degradation of the TPU.

Polycarbonates suitable for use in this present invention are prepared from dihydroxy compounds conforming to the structure of formula I or formula II

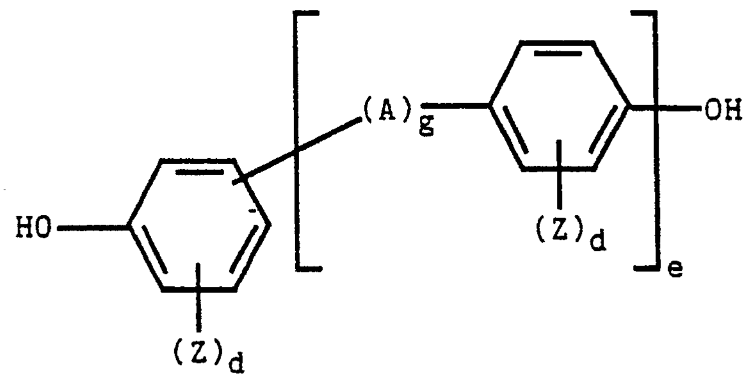

I

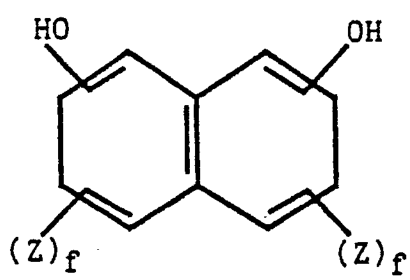

II

wherein A denotes an alkylene group or aryl-substituted alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, an aromatic group with 5 to 15 carbon atoms, a carbonyl group, an oxygen atom, a sulfur atom, an -SO- or $-SO_2-$ radical or a radical of the general formula:

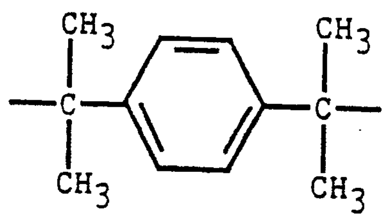

or

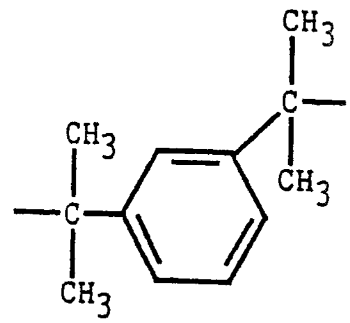

g denotes the number 0 or 1; e denotes the number 0 or 1; Z denotes F, Cl or Br atoms or a $C_{1-4}$ alkyl and if several Z radicals are substituents in one aryl radical, they may be identical or different; d denotes 0 or an integer of from 1 to 4; and f denotes 0 or an integer of from 1 to 3. Preferred are the dihydroxy compounds where g is 1 and e is 1.

Among the useful dihydroxy compounds in the practice of the invention are hydroquinone, resorcinol, bis-(hydroxyphenyl)alkanes, bis-(hydroxyphenyl)cycloalkanes, bis-(hydroxyphenyl)ethers, bis-(hydroxyphenyl)ketones, bis-(hydroxyphenyl)sulfoxides, bis-(hydroxyphenyl)sulfones and α,α-bis-(hydroxyphenyl)diisopropylbenzenes. These and further suitable aromatic dihydroxy compounds are described in U.S. Patent Nos. 2,991,273; 2,999,835; 2,999,846; 3,014,891; 3,028,365; 3,035,021; 3,035,036; 3,036,037; 3,036,038; 3,036,039; 3,148,172; 3,271,367; 3,271,368 and 3,280,078, in German Offenlegungsschriftens (German Published Specifications) 1,570,703; 2,063,050; 2,063,052; 2,211,956 and 2,211,957, in French Patent Specification 1,561,518 and in the monograph, H. Schnell, *Chemistry and Physics of Polycarbonates*, Interscience Publishers, New York (1964). Further examples of suitable dihydroxy compounds are the bisphenols including 2,2-bis-(4-hydroxyphenyl)propane, (bisphenol A), 2,4-bis-(4-hydroxyphenyl)-2-methylbutane, 1,1-bis-(4-hydroxyphenyl)cyclohexane, a,a-bis-(4-hydroxyphenyl-p-diisopropylbenzene, 2,2-bis-(3-chloro-4-hydroxyphenyl)propane, 2,2-bis-(3,5-dichloro-4-hydroxyphenyl) propane, 2,2-bis-(3,5-dibromo-4-hydroxyphenyl) propane and 1,1-bis-(4-hydroxyphenyl)-1-phenylethane hydroxybenzophenone and 4,4-sulfonyl diphenol.

The aromatic polycarbonates used in preparing the polyblend of this invention may entail in their structure units derived from one or more of the suitable dihydroxy compounds.

The most preferred dihydroxy compounds are when g is 1 and e is 1 such as, for example, the bisphenols, especially 2,2-bis-(4-hydroxyphenyl)propane (bisphenol A).

The preparation of polycarbonate resins may be carried out in accordance with any of the processes known in the art, for example, by the interfacial polycondensation process, polycondensation in a homogeneous phase or by transesterification. The suitable processes and conditions have been disclosed in the literature and in general are described in the above-mentioned monograph by H. Schnell.

In the preparation of the aromatic polycarbonate resins used to prepare the polyblends of this invention, monofunctional reactants such as monophenols may be used in order to limit their respective molecular weights. Also, branching may be obtained by the incorporation, in the respective processes, of small amounts, preferably of between 0.05 and 2.0 molar percent (relative to the dihydroxy compound employed) of branching agents which are at least trifunctional compounds, especially, compounds having three or more phenolic hydroxyl groups. Aromatic polycarbonates of this type are described, for example, in German Offenlegungsschriftens (German Published Specifications) 1,570,533; 1,595,762; 2,116,974 and 2,113,347, British Specification 1,079,821 and U.S. Patent No. 3,544,514.

Thermoplastic polyurethanes are substantially linear polymers and have thermoplastic processing characteristics. They may be prepared from the reaction of an organic polyisocyanate, preferably a diisocyanate, with a polyahl composition in the presence of a chain extender. Examples of suitable polyahls include polycaprolactone polyols, polyester polyols and polyether polyols. The respective TPUs are referred to as polycaprolactone polyol-based TPUs, polyester polyol-based TPUs and polyether polyol-based TPUs, respectively. The thermoplastic polyurethane can be prepared by methods as disclosed in U.S. Patent Nos. 3,214,411 or 4,376,834, the teachings of which are incorporated herein by reference. In this invention the thermoplastic polyurethane component of the polyblend is a polycaprolactone polyol-based polyurethane.

The Shore Hardness of the thermoplastic polyurethane is measured according to ASTM D-2240. The thermoplastic polyurethane has a Shore Hardness of from 70A on the "A" scale, and up to 70D on the "D" scale. The TPU preferably has a Shore Hardness of from 70A to 100A, more preferably from 75A to 100A and most preferably from 80A to 90A. On the "D" scale, the TPU preferably has a hardness of from 40D to

70D and more preferably from 40D to 65D and most preferably from 55D to 65D. A larger number indicates a harder TPU.

The TPU is further characterized in that it advantageously has a melt flow rate of from at least 6, preferably at least 8, more preferably at least 10 and up to up to 40, preferably up to 35 and more preferably up to 30 g/10 min. Melt-flow rates are determined according to procedure ASTM D-1238.

Polycaprolactone polyols which can be used to prepare the thermoplastic polycaprolactone polyol-based polyurethane useful in the present invention are those manufactured from a lactone or preferably a caprolactone. Suitable processes for the manufacture of polycaprolactone polyols are disclosed by U.S. Patent Nos. 2,933,477 or 2,933,478.

The polycaprolactone polyol used to prepare the TPUs employed in the present invention advantageously has a molecular weight of at least 500, preferably at least 1250, and more preferably at least 2000, but advantageously less than 20,000, preferably less than 10,000 and more preferably less than 8000. The average functionality of the polyol(i.e. number of isocyanate-reactive hydrogens per molecule) is in the range of 1.8 to 4, and preferably in the range of 1.8 to 2.5.

Any of the organic polyisocyanates and diisocyanates employed in the preparation of polyurethanes can be employed in preparing the TPUs required for the present invention. Illustrative of such isocyanates are: methylene bis(phenylisocyanates) including the 4,4′-isomer, the 2,4′-isomer and mixtures thereof, meta- and para-phenylene diisocyanates, chlorophenylene diisocyanates, $\alpha,\alpha'$-xylylene diisocyanate, 2,4- and 2,6 -toluene diisocyanate and mixtures of these latter two isomers which are available commercially, toluidine diisocyanate, hexamethylene diisocyanate, 1,5-naphthalene diisocyanate, isophorone diisocyanate and methylene bis(cyclohexylisocyanate) including the 4,4′-isomer and 2,4′-isomer, and mixtures thereof.

Preferably, the organic polyisocyanate employed to prepare the TPUs useful in this invention is methylene bis(phenylisocyanate) in the form of the 4,4′-isomer as well as mixtures of the 4,4′-isomer with amounts of up to about 70 percent by weight of the 2,4′-isomer, and modified forms of these diisocyanates. By the latter are meant those forms of methylene bis(phenylisocyanate) which have been treated to render them stable liquids at ambient temperature. Such products include those which have been reacted with a minor amount (up to 0.2 equivalents per equivalent of a polyphenyl polyisocyanate) of an aliphatic glycol or mixture of aliphatic glycols; such modified methylene bis(phenylisocyanates) are described in U.S. Patent Nos. 3,394,164; 3,883,571; 4,115,429; 4,118,411 and 4,299,347; and those wherein a minor amount of the diisocyanate has been converted to the corresponding carbodiimide as described in, for example, U.S. Patent No. 3,384,653. Mixtures of the above-described polyisocyanates can be employed if desired.

The chain extenders which are used in making the TPUs employed in this present invention include aliphatic straight- and branched chain diols including cycloaliphatic diols, preferably having from 2 to 8 carbon atoms, inclusive, in the chain. Illustrative of such diols are ethylene glycol, 1,3-propanediol, 1,5-pentanediol, 1,6-hexanediol, 1,2-propanediol, 1,3-butanediol, 1,4-butanediol, 2,3-butanediol, 1,3-pentanediol, 1,2-hexanediol, 3-methylpentane-1,5-diol, 1,4-cyclohexane dimethanol, and mixtures of two or more such diols. The chain extenders which can be used alone or in admixture with each other or any one of the above diols also include diethylene glycol, dipropylene glycol, tripropylene glycol, ethanolamine, N-methyl diethanolamine, N-ethyl diethanolamine and the like, as well as ester diols obtained by esterifying adipic, azelaic, glutaric and the aliphatic dicarboxylic acids with aliphatic diols such as those exemplified above utilizing of from 0.01 to 0.8 mole of acid per mole of diol. Also included in the chain extenders which can be used in preparing the TPUs are adducts obtained by an aliphatic diol or triol such as 1,4-cyclohexane dimethanol, neopentyl glycol, hexane-1,2-diol, ethylene glycol, butane-1,4-diol, trimethylolpropane, with caprolactone in a mole ratio of from 0.01 to 2 moles of caprolactone per mole of diol or triol.

While any of the diol extenders described and exemplified above can be employed in preparing the thermoplastic polyurethane, alone, or in admixture, it is preferred to use 1,4-butanediol, neopentyl glycol, 1,4-cyclohexane dimethanol, ethylene glycol and diethylene glycol either alone or in admixture with each other.

The hardness of the TPU is controlled in part by the quantity and type of chain extender employed in its preparation. Larger amounts of chain extender generally give harder TPUs.

The polyol, the organic polyisocyanate and the chain extender may be individually heated preferably to a temperature of from 60°C to 135°C and then the polyol and chain extender may be substantially simultaneously mixed with the polyisocyanate. Preferably, the chain extender and the polyol, each of which has been previously heated, are first mixed and the resulting mixture is mixed with the heated polyisocyanate. This method is preferred for the reason that the extender and the polycaprolactone polyol will not react prior to the introduction of polyisocyanate and rapid mixing with the polyisocyanate is thus facilitated.

Advantageously, the rate of reaction may be increased by adding any suitable catalyst to the reaction

mixture such as tertiary amines as disclosed in, for example, U.S. Patent Nos. 2,620,516; 2,621,166 and 2,729,618.

Other techniques for the production of thermoplastic polyurethanes useful in the context of the present invention are disclosed in the text "Polyurethanes: Chemistry and Technology", Vol. 2, pp. 299-452 by J. H. Saunders and K. C. Frisch, Interscience Publishers, New York (1964).

The polyblends of this invention can be prepared by mixing the thermoplastic aromatic polycarbonate with the thermoplastic polyurethane. The blending may be carried out by adding the polycarbonate and polyure thane together and mixing the components with conventional technique and apparatus. In general, the mixtures may be blended by optionally premixing in conventional mixing rolls, dough mixers, Banbury mixers and the like and blending the premix in an extruder or fluxing it on a mill at an elevated temperature sufficient to achieve a melt blending. Prior to melt-blending it is important that all ingredients are dried thoroughly, in for example, a dehumidifying dryer operating at a temperature of greater than 95°C, and are essentially water-free.

The temperature employed in the melt-blending process is sufficient to allow the preparation of the polyblend described in the present invention. Advantageously, the temperature does not exceed the decomposition temperature of the TPU that is to be blended with the polycarbonate. Typically, initial temperatures employed in a melt-blending process will be less than 260°C, preferably less than 250°C and more preferably less than 240°C. These temperatures can be maintained or reduced as appropriate so as to maintain an efficient melt-blending process whilst minimizing any possibility of decomposing the TPU.

The melt-blending process is conducted substantially free of such processing aids that consist of an acrylic polymer typically having a number average molecular weight of from 500,000 to 1,500,000. Typical acrylic polymers are homopolymers of methyl methacrylate; copolymers of methyl methacrylate with n-butyl methacrylate or ethyl acrylate; or terpolymers of methyl methacrylate, n-butyl acrylate and styrene.

By "substantially free" it is understood that the processing aid is present in less than 5.0, preferably less than 3.0 and more preferably less than 1.0 weight percent based on the combined weights of (a) and (b), and most preferably it is absent.

The thermoplastic polyblend can be used to prepare articles through extrusion techniques with or without subsequent forming or injection molding. Alternatively, the polyblend may be transformed into pellets by suitable techniques, such as, for example, disclosed by U.S. Patent Nos. 3,642,964 and 3,963,679, and stored for future use.

The thermoplastic polyblends of the present invention may also optionally contain various commonly known and used additives such as, for example, impact modifying agents; antioxidants; antistatic agents; inert fillers such as glass, talc, mica and clay; ultraviolet radiation absorbers such as benzophenones, benzotriazoles; hydrolytic stabilizers such as the epoxides disclosed in U.S. Patent Nos. 3,489,716; 4,138,379 and 3,839,247; color stabilizers such as organophosphites; thermostabilizers such as phosphites; flame retardants and mold release agents.

Representative of suitable impact modifying agents are selectively hydrogenated linear, sequential or radial teleblock copolymers of a vinyl aromatic compound and an olefinic elastomer such as described in U.S. Patent Nos. 3,281,383; 3,753,936 and 4,481,331.

The impact modifying agents, optionally, employed in preparing the polyblends of the present invention may also include rubbers or rubber-modified polystyrene such as described in European Patent 125,739 and U.S. Patent No. 4,101,504.

Sufficient quantities of the impact modifying agent are employed to give the desired increase in impact performance of the polyblend. Advantageously, the quantity of impact modifying agent employed is from 0.1 to 10, preferably from 2.0 to 10.0, and more preferably from 3.0 to 8.0 weight percent of the combined weight of the thermoplastic aromatic polycarbonate (a) and thermoplastic polyurethane (b) present in the polyblend.

Sufficient quantities of the filler are employed to give a desired increase in modulus and/or a decrease in the coefficient of linear thermal expansion of the polyblend. Advantageously, the quantity of filler employed is from 2.0 to 25.0 and is preferably from 5 to 15 weight percent of the combined weight of the thermoplastic aromatic polycarbonate (a) and thermoplastic polyurethane (b) present in the polyblend.

Impact modifying agents and fillers can be, and advantageously are, used in combination to enhance the physical properties of the polyblend.

The polyblends of the present invention can be melt extruded or molded to form articles such as automotive parts, tool housings, structural components, recreational objects, household appliances and enclosures for transportation or communication and the like. The use of the polyblends of the invention in place of thermoplastic polycarbonate in such applications is particularly advantageous where in the application there is a risk of the article coming into contact with organic solvents, especially hydrocarbon

solvents.

The following examples are given to illustrate the invention and should not be interpreted as limiting it in any way. Unless stated otherwise, all parts and percentages are given by weight.

The following materials are used in the examples. All thermoplastic polyurethanes decribed herein below are adducts of methane diphenylisocyanate with 1,4-butanediol as chain extender and are available from The Dow Chemical Company under the Trade Mark "PELLETHANE".

Thermoplastic Polyurethanes (TPU)

TPU-A a thermoplastic polyurethane having a Shore Hardness of 80A (ASTM D-2240) and an estimated tensile strength of 5500 psi (37.9 x $10^3$ kPa) (ASTM D-412) and a melt flow rate (MFR) (ASTM D-1238-85) of 8 g/10 minutes at 190° C/8.7 kg prepared from a polycaprolactone polyol
(Pellethane 2102-80A)

TPU-B a thermoplastic polyurethane having a Shore Hardness of 90A and an estimated tensile strength of 6000 psi (41.4 x $10^3$ kPa) and a MFR of 10 g/10 minutes at 224° C/1.2 kg prepared from a polycaprolactone polyol.
(Pellethane 2102-90A)

TPU-C a thermoplastic polyurethane having a Shore Hardness of 55D and an estimated tensile strength of 6600 psi (45.5 x $10^3$ kPa) and a MFR of 15 g/10 minutes at 224° C/2.16 kg prepared from a polycaprolactone polyol.
(Pellethane 2102-55D)

TPU-D a thermoplastic polyurethane having a Shore Hardness of 65D and a tensile strength of 6000 psi (41.4 x $10^3$ kPa) and a MFR of 35 g/10 minutes at 224° C/5.0 kg prepared from a polycaprolactone polyol.
(Pellethane 2102-65D)

TPU-E a thermoplastic polyurethane having Shore Hardness of 90A and an estimated tensile strength of 6000 psi (41.4 x $10^3$ kPa) and a MFR g/10 minutes at 224° C/2.16 kg prepared from a polybutylene adipate ester polyol.
(Pellethane 2355-90A)

TPU-F a thermoplastic polyurethane having a Shore Hardness of 90A and an estimated tensile strength of 6200 psi (42.8 x $10^3$ kPa) and a MFR
17 g/10 minutes at 224° C/2.16 kg prepared from a polytetramethylene glycol, polyether polyol.
(Pellethane 2103-90A)

Thermoplastic Polycarbonate

PC-1 a commercially available thermoplastic aromatic polycarbonate Calibre 300-15 having a melt flow rate of 15 g/10 minutes at 300° C/2.8 kg weight (ASTM D-1238) sold by The Dow Chemical Company, and prepared from bisphenol A.

The polyblends of the following examples are prepared in a Werner-Pfleider Twin-Screw extruder ZSK-30 operating at 400 rpm, torque 60 to 70 percent, die pressure 100 psi (690kPa), front zone temperature 240° C, rear zone temperature 230° C. Polycarbonate polymer is dried prior to blending for at least 4 hours in a circulating air oven at about 120° C. Similarly, TPU polymer is dried in a dehumidifying dryer at 99° C for at least 4 hours.

Molded articles from the polyblends are prepared by injection molding using an Arbury 28 ton (25.4 tonnes) injection molder operating at injection pressure 4100 to 5500 kPa (600 to 800 psi), holding pressure 2060 to 3100 kPa (300 to 450 psi), nozzle temperature 227° C to 215° C, all barrel temperature 232° C to 220° C, mold temperature 49° C to 38° C. Prior to molding, the granular polyblend is dried at 100° C for 4 hours in a dehumidifying dryer.

The compositions of the polyblends prepared and the properties of the molded articles obtained from the polyblends are as indicated in Table I.

Test results are in accordance with the following test methods. Melt flow rates, ASTM D-1238-85; flexural modulus, ASTM D-790-84; distortion temperature under load (DTUL), ASTM D-648-82; heat sag, ASTM D-3769; notched izod, ASTM D-256-84; and environmental stress crack resistance (ESCR), GMR-3779.

TABLE I

| Example | TPU (parts by wt) | PC-1 (parts by wt) | MFR(1) | Flexural Modulus psi x $10^5$ | (GPa) | DTUL(2) °F | (°C) | 10 mm Notched Izod -20°F (-29°C) ft-lb/in | (J/m) | ESCR(3) Stress** psi | (kPa x $10^3$) | Strain(4) (%) |
|---|---|---|---|---|---|---|---|---|---|---|---|---|
| A* | - | 100 | 15.0(6) | 3.28 | (2.26) | - | - | 15.5 | (827) | >500 | (> 3.45) | >0.1 |
| 1 | A-5 | 95 | - | 3.39 | (2.34) | - | - | 2.5 | (133) | - | - | - |
| 2 | A-10 | 90 | - | 3.03 | (2.09) | - | - | 14.3 | (763) | - | - | - |
| 3 | A-25 | 75 | 11.8 | 2.20 | (1.52) | 246 | (119) | 3.2 | (171) | 2210 | (15.2) | 1.0 |
| 4 | A-30 | 70 | 19.0 | 1.70 | (1.17) | 246 | (119) | 4.9 | (261) | 2400 | (16.5) | - |
| 5 | A-35 | 65 | 30.6 | 1.50 | (1.03) | 239 | (115) | 18.5 | (987) | 3000 | (20.7) | - |
| 6 | A-40 | 60 | 63.7 | 1.10 | (0.76) | 223 | (106) | 19.6 | (1046) | 2200 | (15.2) | - |
| 7 | A-50 | 50 | - | 0.31 | (0.21) | - | - | 10.7 | (571) | - | - | - |
| 8 | B-25 | 75 | 6.9 | 2.30 | (1.59) | 263 | (128) | 2.1 | (112) | 2320 | (16.0) | 1.0 |
| 9 | B-30 | 70 | 10.7 | 2.10 | (1.45) | 260 | (127) | 1.9 | (101) | 4200 | (29.0) | 2.0 |
| 10 | B-35 | 65 | 14.5 | 1.80 | (1.24) | 253 | (123) | 1.7 | (91) | 3260 | (22.5) | 2.0 |

*not an example of this invention
**calculated from failure strain and modulus

TABLE I (Cont'd)

| Example | TPU (parts by wt) | PC-1 (parts by wt) | MFR(1) | Flexural Modulus psi x $10^5$ | (GPa) | DTUL(2) °F | (°C) | 10 mm Notched Izod -20°F (-29°C) ft-lb/in | (J/m) | ESCR(3) Stress psi | (kPa x $10^3$) | ESCR(3) Strain(4) (%) |
|---|---|---|---|---|---|---|---|---|---|---|---|---|
| 11 | B-40 | 60 | 22.7 | 1.60 | (1.10) | 250 | (121) | 2.0 | (107) | 3140 | (21.65) | (5) |
| 12 | B-45 | 55 | 34.8 | 1.30 | (0.90) | 241 | (116) | 2.1 | (112) | 2680 | (18.5) | (6) |
| 13 | C-25 | 75 | 6.8 | 2.50 | (1.72) | 259 | (126) | 1.3 | (69) | 2520 | (17.4) | 1.0 |
| 14 | C-30 | 70 | 8.4 | 2.30 | (1.59) | 257 | (125) | 1.7 | (91) | 1160 | (8.0) | <0.5 |
| 15 | C-35 | 65 | 9.8 | 2.00 | (1.38) | 253 | (123) | 1.6 | (85) | 2030 | (14.0) | 1.0 |
| 16 | C-40 | 60 | 19.3 | 1.80 | (1.24) | 249 | (121) | 1.5 | (80) | 1770 | (12.2) | 1.0 |
| 17 | C-45 | 55 | 22.6 | 1.70 | (1.17) | 241 | (116) | 1.5 | (80) | 3420 | (23.6) | 2.0 |
| 18 | D-25 | 75 | 7.1 | 2.80 | (1.93) | 264 | (129) | 1.7 | (91) | 2760 | (19.0) | 1.0 |
| 19 | D-30 | 70 | 8.8 | 2.70 | (1.86) | 263 | (128) | 1.5 | (80) | 2690 | (18.5) | 1.0 |
| 20 | D-35 | 65 | 16.9 | 2.40 | (1.65) | 257 | (125) | 1.8 | (96) | 1190 | (8.2) | <0.5 |

TABLE I (Cont'd)

| Example | TPU (parts by wt) | PC-1 (parts by wt) | MFR(1) | Flexural Modulus psi x $10^5$ (GPa) | DTUL(2) °F (°C) | 10 mm Notched Izod -20°F (-29°C) ft-lb/in (J/m) | ESCR(3) Stress psi (kPa x $10^3$) | ESCR(3) Strain(4) (%) |
|---|---|---|---|---|---|---|---|---|
| 21 | D-40 | 60 | 22.9 | 1.90 (1.31) | 254 (123) | 1.8 (96) | 1890 (13.0) | 1.0 |
| 22 | D-45 | 55 | 27.0 | 1.80 (1.24) | 249 (121) | 1.5 (80) | 1760 (12.1) | 1.0 |
| B* | E-35 | 65 | 11.9 | 1.80 (1.24) | 253 (123) | 1.6 (85) | 3260 (22.5) | 2.0 |
| C* | F-35 | 65 | 18.6 | 1.90 (1.31) | 255 (124) | 3.4 (181) | 3720 (25.7) | 2.0 |

*Not an example of this invention
(1)Melt flow rate ASTM D-1238-85, 230°C/3.8 kg
(2)Distortion temperature under load (66 psi; 455kPa), ASTM D-648
(3)Environmental stress crack resistance GMR-3779, 75% isooctane/25% toluene
(4)Minimum at failure
(5)No failure at 2% strain
(6)Melt flow rate ASTM D-1238-85, 300°C/1.2 kg

As can be seen from the data presented in Table I, the melt flow rate properties of the polyblends improve with the increasing quantity of thermoplastic polyurethane incorporated therein.

With respect to flexural modulus it is to be observed that as more TPU is incorporated into the blend the resulting blend exhibits more flexibility as seen by a lower flexural modulus. When the blended thermoplastic polyurethane is a harder polyurethane, then the increase in flexibility of the resulting blend is somewhat lower than when a similar percentage of a softer thermoplastic polyurethane is present in the polyblend.

The flexural modulus of the resulting polyblend will also be dependent on the post-injection, extruding, and mold thermal history to which the polyblend has been subjected. If the polyblend is allowed to cool slowly, hard segments contained within the thermoplastic polyurethane can more easily align into crystalline formations influencing the flexural modulus of the final product. If the polyblend is cooled quickly, there is insufficient time to obtain crystalline formations. The presence of crystalline formation can enhance the flexural modulus.

Distortion temperatures under load become relatively lower as the quantity of TPU in the polyblend increases. The polyblends prepared with harder thermoplastic polyurethanes, show superior DTUL performance in relation to polyblends prepared with softer thermoplastic polyurethanes.

In the notched izod impact test, a surprising and unexpected result is the superior performance of polyblends made with the polycaprolactone polyol-based thermoplastic polyurethane having a Shore Hardness of 80A, especially when such TPU is present at 35, 45 and 50 percent by weight of the polyblend as for Examples 5-7.

The environmental stress crack resistance (ESCR) observations indicate that as the quantity of thermoplastic polyurethane present in the polyblend increases, the better the resistance. Again, as with the impact strength properties, optimum ESCR performance is observed when using thermoplastic polyurethanes having a Shore Hardness from about 80A to about 90A. The data also suggests that optimum solvent resistance is obtained when the thermoplastic polyurethane is present in from about 30 to about 40 percent by weight of the polyblend.

Comparative examples B and C relate to a polyblend containing respectively, a polyester polyol-based TPU and a polyether polyol-based TPU, each having a Shore Hardness of 90A.

Comparing Example 5 with Example 10 illustrates the significantly large and unexpected improvements in melt-flow rates and impact properties whilst maintaining good ESCR performance, that can be obtained when the polyblend contains a polycaprolactone polyol-based TPU having a Shore Hardness of 80A.

## Claims

1. A thermoplastic composition comprising a polyblend of a thermoplastic aromatic polycarbonate polymer and a thermoplastic polyurethane characterized in that said polyblend consists essentially of

(a) from 50 to 95 weight percent based on the combined weights of (a) and (b) of a thermoplastic aromatic polycarbonate polymer; and

(b) from 5 to 50 weight percent based on the combined weights of (a) and (b) of a thermoplastic polycaprolactone polyol-based polyurethane having a Shore Hardness from 70A to 70D.

2. A composition as claimed in Claim 1, wherein said polyblend exhibits an environmental crack stress resistance of at least 8 MPa (1160 psi) and a flexural modulus of at least 0.75 GPa (1.10 x $10^5$ psi).

3. A composition as claimed in Claim 1 or Claim 2, wherein the thermoplastic polycaprolactone polyol-based polyurethane is present in from 25 to 50 weight percent based on the combined weights of (a) and (b).

4. A composition as claimed in any one of the preceding claims, wherein the thermoplastic polyurethane has a Shore Hardness of from 70A to 100A.

5. A composition as claimed in any one of Claims 1 to 3, wherein the thermoplastic polyurethane has a Shore Hardness of from 40D to 70D.

6. A composition as claimed in any one of the preceding claims which additionally comprises an impact modifying agent in an amount of from 0.1 to 10 weight percent based on the combined weights of (a) and (b), and/or a filler in an amount of from 2.0 to 25 weight percent based on the combined weights of (a) and (b).

7. A composition as claimed in any one of the preceding claims, wherein the thermoplastic aromatic polycarbonate polymer has a melt-flow rate of at least 8 g/10 minutes at 300 °C/1.2 kg.

8. A composition as claimed in any one of the preceding claims, wherein the composition contains no

or less than 3 weight percent based on the combined weights of (a) and (b) of acrylic polymer.

9. A composition as claimed in any one of the preceding claims, wherein the thermoplastic aromatic polycarbonate polymer is derived from bisphenol.

10. A composition as claimed in any one of the preceding claims, wherein the thermoplastic polyurethane is derived from a polycaprolactone polyol, a methylene bis(phenylisocyanate), and a diol extender selected from 1,4-butanediol, neopentyl glycol, 1,4-cyclohexane dimethanol, ethylene glycol, diethylene glycol and mixtures thereof.

11. A process for preparing a thermoplastic composition by melt blending a thermoplastic aromatic polycarbonate polymer and a thermoplastic polyurethane characterized in that

(a) from 50 to 95 weight percent based on the combined weights of (a) and (b) of a thermoplastic aromatic polycarbonate polymer; and

(b) from 5 to 50 weight percent based on the combined weights of (a) and (b) of a thermoplastic polycaprolactone polyol-based polyurethane having a Shore Hardness from 70A to 70D,

are melt blended in the absence of, or in the presence of less than 5 weight percent based on the combined weights of (a) and (b) of, an acrylic polymer processing aid.

12. An article prepared by melt extrusion or moulding of a composition as claimed in any one of Claims 1 to 10.